# EUROPÄISCHE PATENTSCHRIFT

(11) **EP 0 582 110 B1**
(45) Veröffentlichungstag und Bekanntmachung des Hinweises auf die Patenterteilung: **13.05.1998**
(21) Anmeldenummer: 93111267.6
(22) Anmeldetag: 14.07.1993
(51) Int. Cl.: F24D 12/02, F02G 5/04

(54) **Gerät zum Erwärmen von Wasser, insb. Warmwasserheizkessel**
Apparatus for heating water, especially hot water boiler
Appareil pour chauffer de l'eau en particulier chaudière à eau chaude

(30) Priorität: 07.08.1992 DE 4226122
(43) Veröffentlichungstag der Anmeldung: 09.02.1994
(73) Patentinhaber: Vetter, Richard, D-31226 Peine (DE)
(72) Erfinder: Vetter, Richard, D-31226 Peine (DE)
(74) Vertreter: Depmeyer, Lothar

(56) Entgegenhaltungen:
- EP-A- 0 190 616
- WO-A-88/06258
- DE-A- 2 723 144
- DE-A- 2 930 359
- NL-A- 8 201 926

## Beschreibung

Die Erfindung betrifft ein Gerät zum Erwärmen von Wasser, insb. Warmwasserheizkessel mit einer einen Brenner aufweisenden, oben im Gerät befindlichen Brenn-kammer, einem unterhalb der Brennkammer befindlichen Wärmetauscher für das zu erwärmende Wasser und mit einem unten im Gerät befindlichen, von den Verbrennungsgasen durchströmten weiteren Wärmetauscher zum Vorwärmen der Verbrennungsluft für den Brenner.

Ein Warmwasserheizkessel mit einer einen Brenner aufweisenden, oben im Gerät angeordnet Brennkammer, einem darunter befindlichen Wärmetauscher für das zu erwärmende Wasser und einem unten im Gerät befindlichen Wärmetauscher zum Vorwärmen der Verbrennungsluft für den Brenner ist aus der EP-A-0 190 616 bekannt. Bei Geräten dieser Ausbildung wird der Brenner im Regelfalle eingeschaltet, wenn die Rücklauftemperatur etwa 60° C beträgt; wenn die Temperatur auf etwa 72° C angestiegen ist, erfolgt die Abschaltung der Wärmequelle.

Eine andere bekannte Heizkesselanlage (NL-A-8 201 926) weist eine Verbrennungskraftmaschine auf, wobei das zu erwärmende Wasser durch das Kühlwasser der Verbrennungskraftmaschine angewärmt wird bzw. selbst als Kühlwasser dient, um so eine günstige Nutzung der aufgewendeten Energie zu erreichen. In erster Linie erfolgt die Wärmeerzeugung jedoch durch einen Brenner. Die Verbrennungskraftmaschine dient zum Antrieb eines Ventilators, der den Brenner mit Verbrennungsluft versorgt. Die Verbrennungskraftmaschine ist Bestandteil der Heizkesselanlage. Ein Betrieb der Heizung ohne die Verbrennungskraftmaschine ist nicht möglich.

Eine weitere bekannte Vorrichtung zur Versorgung eines Gebäudes mit Energie (DE-A-27 23 144) weist einen Heizkessel zur Erwärmung von Wasser und eine Verbrennungskraftmaschine als separate Geräte auf. Die Verbrennungskraftmaschine dient zum Antrieb eines Generators. Der Generator kann elektrischen Strom auf eine Heizspirale geben, welche ebenfalls zur Wassererwärmung dient. Mit der Verbrennungskraftmaschine läßt sich somit eine zweite, vom Heizkessel unabhängige Wärmequelle betreiben.

Aufgrund der Erfindung soll nun eine weitere Wirkverbindung zwischen dem eingangs erwähnten Gerät zum Erwärmen von Wasser und der Verbrennungskraftmaschine hergestellt werden, durch die eine weitere Brennstoffersparnis erreichbar ist.

Demgemäß strebt die Erfindung eine Verbesserung des Wirkungsgrades der eingangs erwähnten Geräte an.

Diese Aufgabe wird erfindungsgemäß durch die Merkmale des Patentanspruchs 1 gelöst.

Somit kann von dem Gerät zum Erwärmen von Wasser erzeugte Energie, die keinen Beitrag zur Erwärmung des leistet, durch die Verbrennungskraftmaschine genutzt werden.

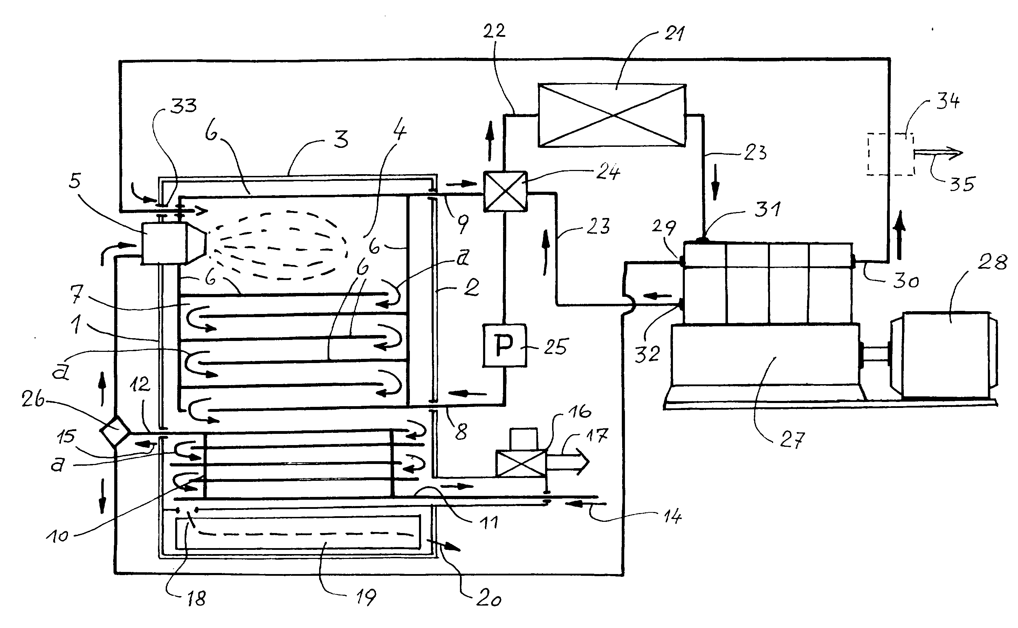

Weitere Einzelheiten der Erfindung werden anhand der Zeichnung erläutert, in der ein Ausführungsbeispiel der Erfindung dargestellt ist.

Die Abbildung zeigt einen Warmwasserheizkessel zusammen mit einem Dieselstromaggregat in schaubildlicher Darstellung.

In einem quaderförmigen Gehäuse mit Vorderwand 1, Rückwand 2 und Abdeckung 3 befindet sich oben unter der Abdeckung 3 eine Brennkammer 4 mit einem durch Öl oder Gas betriebenen Brenner 5. Sein Gebläse ist nicht dargestellt. Dieser Brennkammer 4 sind oben und seitlich Wasser führende Platten 6 zugeordnet, die zusammen mit weiteren, darunter befindlichen Platten 6 einen der Wassererwärmung dienenden Wärmetauscher 7 bilden, dessen Einlass mit 8 und dessen Auslass mit 9 bezeichnet ist. Von der Brennkammer 4 aus durchströmen die Verbrennungsgase den Wärmetauscher 7 in s-förmigen Bahnen im Sinne der Pfeile a.

Vom Wärmetauscher 7 aus gelangen die Verbrennungsgase zu einem weiteren, ebenfalls aus Platten 6 bestehenden Wärmetauscher 10 mit Einlass 11 und Auslass 12. Dem Wärmetauscher 10 wird Luft im Sinne des Pfeiles 14 zugeleitet; die Luft wird im Sinne des Pfeiles 15 abgezogen. Die im Wärmetauscher 10 ebenfalls s-förmig geführten Verbrennugsggase werden von einem Ventilator 16 angesaugt, der die Verbrennungsgase über eine Leitung 17 ins Freie treibt.

Unterhalb des Wärmetauschers 10 sammelt sich anfallendes Kondensat, das bei 18 in eine Neutralisationskammer 19 gelangt, von der aus das Wasser bei 20 anfällt.

Der Wasserverbraucher 21 z. B. in Form einer Hausanlage hat einen Vorlauf 22 und einen Rücklauf 23. Vorgesehen ist ferner ein Vierwegehahn 24, der in seiner Normalstellung keinen Beipass für den Wärmetauscher 7 bildet, also den Vorlauf 22 und den Rücklauf 23 mit den Anschlüssen 8, 9 verbindet. In den Rücklauf ist noch eine Umwälzpumpe 25 eingeschaltet.

Der Vierwegehahn 24 ist in üblicher Weise so ausgebildet, dass er bei einer Unterschreitung der Wassertemperatur von etwa 60° am Einlass 8 eine Beipassregelung bewirkt, indem er Wasser unmittelbar vom Auslass 9 dem Einlass 8 zuführt.

Die Verbrennungsgase werden im Wärmetauscher 7 etwa auf die Wassertemperatur am Einlass 8 abgekühlt. Im Wärmetauscher 10 wird den Verbrennungsgasen weitere Wärme entzogen; vor dem Ventilator 16 haben sie dann eine Temperatur von etwa 20 - 40° C. Demgemäss erfolgt auch eine Kondensation, das Kondensat wird dann - wie erwähnt - der Neutralisationskammer 19 zugeführt, in der die Schadstoffe neutralisiert werden, während das bei 20 abgezogene Wasser ohne weiteres der Kanalisation zugeleitet werden kann.

Die aus dem Wärmetauscher 10 heraustretende vorgewärmte Luft wird über einen Dreiwegehahn 26 dem Brenner 5 zugeleitet, um so eine günstige Verbrennung zu bewirken, nachdem die Luft vorher für eine weitere, nämlich die oben erwähnte Abkühlung der Verbrennungsgase vollzogen hatte.

Von besonderer Bedeutung ist, dass dem oben beschriebenen Warmwasserheizkessel ein Dieselaggregat mit einem nach dem Diesel-Prinzip wirkenden Motor 27 und angeflanschtem Stromgenerator 28 zugeordnet ist, und zwar in der Weise, dass zwischen dem Diesel 27 und dem Warmwasserheizkessel eine wärmetechnische Verbindung entsteht.

Der Motor 27 hat einen Ansaugstutzen 29 für die Luft, einen Austritt 30 für die Abgase, einen Kühlwassereintritt 31 und einen Kühlwasseraustritt 32.

Um eine Wirkverbindung im vorgenannten Sinne herzustellen, wird über den Dreiwegehahn 26 im Wärmetauscher 10 vorgewärmte Luft dem Ansaugstutzen 29 zugeleitet, während die bei 30 austretenden Abgase bei 33 unmittelbar in die Brennkammer 4 geleitet werden können. Darüber hinaus ist es zweckmässig, in die Abgasleitung einen z.B. als Dreiwegehahrtausgeführten Hahn 34 einzusetzen, um wahlweise die Abgase ganz oder zum Teil vorher über die Leitung 35 abzuführen.

Es sei erwähnt, dass die Bemessung des Warmwasserheizkessels nicht nur für die der Brennerleistung entsprechende, Menge der Verbrennungsgase, sondern auch unter Berücksichtigung der vom Motor 27 zufliessenden Abgasmenge erfolgen muss.

Wenn ein ständig arbeitender Motor 27 benutzt wird, so kann die Heizleistung aus dem Warmwasserkessel durch die Abgase des Motors 27 allein erbracht werden. Ist der Wärmebedarf grösser, so wird im Regelfalle der Brenner 5 zugeschaltet. Ebenso kann bei wechselnder Motorbeanspruchung eine entsprechende Zusatzleistung des Brenners 5 in Anspruch genommen werden. Auch kann natürlich bei stehendem Motor 27 der Brenner 5 allein arbeiten.

Im obigen Falle erfolgt also eine Wirkverbindung zwischen dem Warmwasserheizkessel und dem Motor durch Ausnutzung der Abgaswärme des Motors 27 und eine Beeinflussung des Wärmetauschers 10 durch die Ansaugluft des Motors 27.

Es ist aber noch eine weitere Verknüpfung möglich, indem der Kühlwasserkreislauf des Motors 27 in Betracht gezogen wird. Es ist daher angebracht, den Kühlwasserlauf des Motors 27 in den vom Wärmetauscher 7 beeinflussten Wasserkreislauf einzubinden. Dies geschieht aufgrund der Erfindung dadurch, dass das Wasser des Rücklaufs als Kühlwasser benutzt wird bzw. die Motorwärme über das Kühlwasser in den Warmwasserprozess eingeführt wird. Zweckmässigerweise wird dazu der Rücklauf 23 des Verbrauchers 21 mit dem Kühlwassereintritt 31 des Motors 27 und dessen Kühlwasseraustritt 32 mit dem Vierwegehahn 24 verbunden. Dies bedeutet, dass der Kühlwasseraustritt des Motors 27 dazu beiträgt, die Rücklauftemperatur im Rücklauf 23 nicht unnötig absinken zu lassen und den Wärmetauscher 7 mit vergleichsweise wärmerem Wasser zu speisen ( im Vergleich zu einem Gerät ohne Motor 27 ). Der Motor 27 ist also gewissermassen ein Wärmetauscher, der mit dem Wärmetauscher 7 zusammenarbeitet und diesen unterstützt bzw. sogar ersetzen kann. Dabei erfolgt in üblicher Weise eine Steuerung über dem Vierwegehahn 24, den entsprechende Fühler und dgl. zuzuordnen sind, damit er seine Aufgabe erfüllen kann.

Da der Warmwasserheizkessel mit einer Umwälzpumpe 25 ausgestattet ist, kann sogar im Kühlwasserkreislauf des Motors 27 eine eigene Umwälzpumpe eingespart werden, da die Umwälzpumpe 25 mit dem Kühlwasserleitungssystem des Motors 27 verbunden ist.

## Patentansprüche

1. Gerät zum Erwärmen von Wasser, insb. Warmwasserheizkessel mit einer einen Brenner (5) aufweisenden, oben im Gerät befindlichen Brennkammer (4), einem unterhalb der Brennkammer (4) befindlichen Wärmetauscher (7) für das zu erwärmende Wasser und mit einem unten im Gerät befindlichen, von den Verbrennungsgasen durchströmten weiteren Wärmetauscher (10) zum Vorwärmen der Verbrennungsluft für den Brenner (5), dadurch gekennzeichnet, daß das Gerät mit einer Verbrennungskraftmaschine (27) gekoppelt ist, wobei die Kühlwasserleitung der Verbrennungskraftmaschine (27) ganz oder teilweise Bestandteil der von dem Gerät gespeisten Leitung für das zu erwärmende Wasser ist, und die vom weiteren Wärmetauscher (10) vorgewärmte Luft dem Ansaugstutzen der Verbrennungskraftmaschine (27) zuleitbar ist.

2. Gerät nach Anspruch 1, dadurch gekennzeichnet, daß die Luft teilweise dem Brenner (5) und im übrigen der Verbrennungskraftmaschine (27) zuleitbar ist.

3. Gerät nach Anspruch 1, das mit einem Vierwegehahn zum Anschluss des Vor- und Rücklaufs versehen ist, dadurch gekennzeichnet, dass die Kühlwasserleitung der Verbrennungskraftmaschine (27) an den Vierwegehahn (24) und den Warmwasserverbraucher (21) des Gerätes angeschlossen ist.

4. Gerät nach Anspruch 1, dadurch gekennzeichnet, dass die Förderung des Kühlwassers in der Verbrennungskraftmaschine (27) durch die Umwälzpumpe (25) des Gerätes erfolgt.

5. Gerät nach Anspruch 2, dadurch gekennzeichnet, dass die Kühlwasserleitung der Verbrennungskraftmaschine (27) zwischen dem Warmwasserverbraucher (21) des Gerätes und dem Gerät selbst eingeschaltet ist.

6. Gerät nach Anspruch 1, dadurch gekennzeichnet, dass die Abgase der Verbrennungskraftmaschine, (27) in die Brennkammer (4) des Gerätes einleitbar sind.

7. Gerät nach Anspruch 1, dadurch gekennzeichnet, dass die Verbrennungskraftmaschine (27) Bestandteil einer Stromerzeugungsanlage ist.

8. Gerät nach Anspruch 6, dadurch gekennzeichnet, dass der Brenner (5) des Gerätes abschaltbar und das Gerät durch die Abgase betrieben ist.

## Claims

1. Apparatus for heating water, esp. a hot-water heating boiler, including a combustion chamber (4), which has a burner (5) and is situated in the upper portion of the apparatus, a heat exchanger (7), which is situated beneath the combustion chamber (4), for the water to be heated, and an additional heat exchanger (10), which is situated in the lower portion of the apparatus and is traversed by the combustion gases, for preheating the combustion air for the burner (5), characterised in that the apparatus is connected to an internal combustion engine (27), the cooling-water pipe of the internal combustion engine (27) being wholly or partially a component part of the pipe, which is fed by the apparatus, for the water to be heated, and the air, which is preheated by the additional heat exchanger (10), being suppliable to the induction manifold of the internal combustion engine (27).

2. Apparatus according to claim 1, characterised in that some of the air can be supplied to the burner (5), and the rest of the air can be supplied to the internal combustion engine (27).

3. Apparatus according to claim 1, which is provided with a four-way valve for the connection of the forward flow and backward flow, characterised in that the cooling-water pipe of the internal combustion engine (27) communicates with the four-way valve (24) and the hot-water consuming device (21) of the apparatus.

4. Apparatus according to claim 1, characterised in that the conveyance of the cooling water in the internal combustion engine (27) is effected by the circulating pump (25) of the apparatus.

5. Apparatus according to claim 2, characterised in that the cooling-water pipe of the internal combustion engine (27) is inserted between the hot-water consuming device (21) of the apparatus and the apparatus itself.

6. Apparatus according to claim 1, characterised in that the exhaust gases of the internal combustion engine (27) can be introduced into the combustion chamber (4) of the apparatus.

7. Apparatus according to claim 1, characterised in that the internal combustion engine (27) is a component part of a power-generating system.

8. Apparatus according to claim 6, characterised in that the burner (5) of the apparatus can be switched-off, and the apparatus is driven by the exhaust gases.

## Revendications

1. Appareil pour chauffer de l'eau, notamment chaudière à eau chaude, comportant une chambre (4) de combustion, qui se trouve en haut de l'appareil et qui comporte un brûleur (5), un échangeur (7) de chaleur, qui se trouve au-dessous de la chambre (4) de combustion, pour l'eau à chauffer, et un échangeur (10) de chaleur supplémentaire, qui se trouve au bas de l'appareil et qui est traversé par les gaz de combustion, pour préchauffer l'air de combustion destiné au brûleur (5), caractérisé en ce que l'appareil est couplé à une machine (27) à combustion interne, la conduite d'eau de refroidissement de la machine (27) à combustion interne faisant partie totalement ou partiellement de la conduite alimentée par l'appareil et destinée à l'eau à chauffer, et l'air préchauffé par l'échangeur (10) de chaleur supplémentaire peut être envoyé à l'embout d'aspiration de la machine (27) à combustion interne.

2. Appareil suivant la revendication 1, caractérisé en ce que l'air peut être envoyé partiellement au brûleur (5) et, en outre, à la machine (27) à combustion interne.

3. Appareil suivant la revendication 1, qui est muni d'un robinet à quatre voies pour le raccordement du conduit d'alimentation et du conduit de renvoi, caractérisé en ce que le conduit d'eau de refroidissement de la machine (27) à combustion interne est raccordé au robinet (24) à quatre voies et à l'appareil (21) consommateur d'eau chaude de l'appareil.

4. Appareil suivant la revendication 1, caractérisé en ce que le convoyage de l'eau de refroidissement dans la machine (27) à combustion interne s'effectue par la pompe (25) de circulation de l'appareil.

5. Appareil suivant la revendication 2, caractérisé en ce que la conduite d'eau de refroidissement de la machine (27) à combustion interne est branchée entre l'appareil (21) consommateur d'eau chaude de l'appareil et l'appareil lui-même.

6. Appareil suivant la revendication 1, caractérisé en ce que les effluents gazeux de la machine (27) à combustion interne peuvent être introduits dans la chambre (4) de combustion de l'appareil.

7. Appareil suivant la revendication 1, caractérisé en ce que la machine (27) à combustion interne fait partie d'une installation de production de courant.

8. Appareil suivant la revendication 6, caractérisé en ce que le brûleur (5) de l'appareil peut être arrêté et que l'on peut faire fonctionner l'appareil par les effluents gazeux.
